# EUROPÄISCHE PATENTSCHRIFT

(11) **EP 4 168 692 B1**
(45) Veröffentlichungstag und Bekanntmachung des Hinweises auf die Patenterteilung: **26.03.2025**
(21) Anmeldenummer: 21728828.1
(22) Anmeldetag: 26.05.2021
(51) Int. Cl.: F16H 57/021, F16H 57/025

(54) **GETRIEBE MIT EINER WELLE**
TRANSMISSION COMPRISING A SHAFT
TRANSMISSION COMPRENANT UN ARBRE

(30) Priorität: 19.06.2020 DE 102020003673
(43) Veröffentlichungstag der Anmeldung: 26.04.2023
(73) Patentinhaber: SEW-EURODRIVE GmbH & Co. KG, 76646 Bruchsal (DE)
(72) Erfinder: SOARES, Juliano Cesar, 13340-486 Indaiatube - SP (BR); VIEIRA, Antonio Ventriglia, 13320-370 Salto - SP (BR)
(86) Internationale Anmeldenummer: PCT/EP2021/025194
(87) Internationale Veröffentlichungsnummer: WO 2021/254658

(56) Entgegenhaltungen:
- WO-A2-2010/108602
- CN-A- 106 122 448
- CN-A- 108 953 506
- DE-A1- 102018 005 088
- DE-A1- 102018 104 685
- US-A- 3 645 153

## Beschreibung

Die Erfindung betrifft ein Getriebe mit einer Welle.

Es ist allgemein bekannt, dass ein Getriebe mit einer Welle und weiteren Wellen ausgeführt ist, wobei jeweilige Verzahnungsteil drehfest mit den Wellen verbunden sind.

**Aus der** DE 10 2018 104 685 A1 **ist als nächstliegender Stand der Technik eine**

**Antriebsvorrichtung mit einem Elektromotor und einem Getriebe bekannt.**

**Aus der** US 3 645 153 A **ist ein Differentialantrieb für Fahrzeuge bekannt.**

**Aus der** CN 106 122 448 B **ist ein Getriebe bekannt.**

**Aus der** CN 108 953 506 A **ist ein Küchengerät mit Antrieb bekannt.**

**Aus der** WO 2010/108602 A2 **ist ein Getriebe bekannt.**

**Aus der** DE 10 2018 005 008 A1 **ist eine Windenergieanlage bekannt.**

Der Erfindung liegt daher die Aufgabe zugrunde, ein Getriebe mit hoher Standzeit trotz großer Belastungen weiterzubilden.

Erfindungsgemäß wird die Aufgabe bei dem Getriebe nach den in Anspruch 1 angegebenen Merkmalen gelöst.

Von Vorteil ist dabei, dass das Getriebe eine hohe Standzeit auch bei großen Belastungen erreicht, da das zusätzliche Lager als Axiallager ausführbar ist und somit Axialkräfte und auch hohe Drehmomente über das erste Gehäuseteil ableitet, insbesondere an das zweite Gehäuseteil, das mit dem Motorgehäuse eines das Getriebe antreibenden Elektromotors verbunden ist, insbesondere drehfest verbunden ist.

Die Rotorwelle des Elektromotors ist drehfest mit der Antriebswelle des Getriebes verbunden.

Somit ist das Gehäuse der vom Getriebe angetriebenen Last mit dem zweiten Gehäuseteil drehfest verbindbar, insbesondere zur Rückführung von Reaktionsmoment.

Das zusätzliche Lager schützt das restliche Getriebe vor diesen Belastungen, insbesondere vor hohen Axialkrafteinleitungen. Somit sind das erste und zweite Lager kostengünstig als Radiallager ausführbar.

Bei einer vorteilhaften Ausgestaltung ist das zusätzliche Lager auf der axial vom ersten Lager abgewandten Seite des zweiten Lagers angeordnet ist. Von Vorteil ist dabei, dass das zusätzliche Lager nicht zwischen den beiden anderen Lagern angeordnet ist, sondern axial zwischen der vom Getriebe angetriebenen Last und den beiden anderen Lagern angeordnet ist. somit ist ein verbesserter Schutz erreichbar und die Standzeit erhöhbar.

**Erfindungsgemäß** ist am ersten Gehäuseteil zumindest ein erster Armbereich angeformt, wobei der erste Armbereich zum zweiten Gehäuseteil insbesondere drehfest verbunden ist, insbesondere wobei der erste Armbereich am ersten Gehäuseteil radial hervorragt. Von Vorteil ist dabei, dass das durch das zusätzliche Lager ans erste Gehäuseteil abgeleitete Drehmoment zum zweiten Gehäuseteil hin weiterleitbar ist, welches nicht nur mit dem Motorgehäuse, sondern auch mit einem Gehäuseteil der vom Getriebe angetriebenen Last verbunden ist.

Bei einer vorteilhaften Ausgestaltung ist eine durch eine durchgehende Ausnehmung des ersten Armbereichs durchgehende erste Schraube mit ihrem Gewindebereich in eine Gewindebohrung des zweiten Gehäuseteils eingeschraubt und mit ihrem auf der vom zweiten Gehäuseteil abgewandten Seite des ersten Armbereichs angeordneten Schraubenkopf den ersten Armbereich zum zweiten Gehäuseteil hindrückt,
insbesondere wobei die durchgehende Ausnehmung
   - in einem verdickten Bereich des ersten Armbereichs angeordnet ist
   - und/oder in einem Bereich des ersten Armbereichs angeordnet ist, welcher eine größere Wandstärke aufweist als ein anderer, an den Bereich angrenzender Bereich des ersten Armbereichs.

Von Vorteil ist dabei, dass eine einfache Verbindung ausführbar ist.

Bei einer vorteilhaften Ausgestaltung weist
am ersten Gehäuseteil zumindest ein zweiter Armbereich angeformt ist,
wobei der zweite Armbereich zum zweiten Gehäuseteil insbesondere drehfest verbunden ist,
insbesondere wobei der zweite Armbereich am ersten Gehäuseteil radial hervorragt. Von Vorteil ist dabei, dass ein hohes Reaktionsmoment ans erste Gehäuseteil ableitbar ist.

Bei einer vorteilhaften Ausgestaltung ist eine durch eine durchgehende Ausnehmung des zweiten Armbereichs durchgehende zweite Schraube mit ihrem Gewindebereich in eine zweite Gewindebohrung des zweiten Gehäuseteils eingeschraubt und drückt mit ihrem auf der vom zweiten Gehäuseteil abgewandten Seite des zweiten Armbereichs angeordneten Schraubenkopf den zweiten Armbereich zum zweiten Gehäuseteil hin,
insbesondere wobei die durchgehende Ausnehmung
- in einem verdickten Bereich des zweiten Armbereichs angeordnet ist und/oder
- in einem Bereich des zweiten Armbereichs angeordnet ist, welcher eine größere Wandstärke aufweist als ein anderer, an den Bereich angrenzender Bereich des zweiten Armbereichs. Von Vorteil ist dabei, dass eine einfache und kostengünstige Befestigung erreichbar ist.

**Erfindungsgemäß** ist ein Ausgleichsteil zwischen dem ersten Armbereich und dem zweiten Gehäuseteil angeordnet, insbesondere zum Ausfüllen oder Überbrücken eines Abstands zwischen dem ersten Armbereich und dem zweiten Gehäuseteil. Von Vorteil ist dabei, dass der Abstand überbrückbar ist. Zwar ist das erste Gehäuseteil mittels seines Zentrierbundes am Zentriersitz des zweiten Gehäuseteils festgelegt, aber mittels des Ausgleichsteil sind Fertigungstoleranzen und durch elastische Spannungen bewirkte Abstandsänderungen ausgleichbar. Insbesondere durch Ausführen des Ausgleichsteils aus einem weicheren Material als das erste und als das zweite Gehäuseteil ist eine Schwingungsdämpfung erreichbar.

Bei einer vorteilhaften Ausgestaltung ist das Ausgleichsteil einteilig ausgeführt ist oder mehrteilig, insbesondere als Stapel von zueinander identischen Teilen. Von Vorteil ist dabei, dass bei einer einteiligen Ausführung eine einfache Kompensation und bei der mehrteiligen Ausführung eine Feineinstellung ermöglicht ist.

**Erfindungsgemäß** ist das Ausgleichsteil U-förmig ausgeführt ist, insbesondere aus radialer Richtung kommend auf die Schraube aufsteckbar ist, und/oder als ebenes Stanzteil hergestellt ist. Von Vorteil ist dabei, dass bei der Montage ein radial gerichtetes Aufstecken auf die schon eingeführte jeweilige Schraube ermöglicht ist und somit ein einfacher Herstellungsvorgang erreichbar ist.

Bei einer vorteilhaften Ausgestaltung ist ein Deckelteil mit dem ersten Gehäuseteil verbunden,
wobei im Deckelteil ein Wellendichtring aufgenommen ist, welcher das Deckelteil zur Welle hin abdichtet,
insbesondere wobei das Deckelteil auf der vom ersten Lager axial abgewandten Seite des zusätzlichen Lagers angeordnet ist. Von Vorteil ist dabei, dass innerhalb des ersten Gehäuseteils ein zum eigentlichen, insbesondere vom zweiten Gehäuseteil begrenzter separater Ölsumpf ausbildbar ist. Somit ist auch bei Stillstand eine Schmierung des zusätzlichen Lagers ermöglicht, insbesondere derjenigen Wälzkörper des zusätzlichen Lagers, welche bei Stillstand unterhalb des Ölpegels im vom Deckelteil und ersten Gehäuseteil umgebenen Innenraum angeordnet sind.

Bei einer vorteilhaften Ausgestaltung ist die axiale Richtung parallel zur Drehachse der Welle,
insbesondere wobei das Getriebe derart ausgerichtet ist, dass die Drehachse im Wesentlichen horizontal ausgerichtet ist. Von Vorteil ist dabei, dass ein Ölsumpf im vom Deckelteil und ersten Gehäuseteil umgebenen Innenraumbereich ausbildbar ist, in welchen Wälzkörper des zusätzlichen Lagers zumindest teilweise eingetaucht sind.

Bei einer vorteilhaften Ausgestaltung ragt die Welle durch eine Ausnehmung des ersten Gehäuseteils hindurch, deren Innendurchmesser, insbesondere lichter Innendurchmesser, kleiner ist als der Außendurchmesser des zweiten Lagers und kleiner ist als der Außendurchmesser des zusätzlichen Lagers. Von Vorteil ist dabei, dass im Bereich des zusätzlichen Lagers ein anderer Ölpegel ermöglicht ist als im Bereich des ersten und des zweiten Lagers, also in dem vom zumindest teilweise vom zweiten Gehäuseteil umgebenen Innenraumbereich. Somit ist der Ölpegel für das zusätzliche Lager derart dimensionierbar, dass schon vor dem Start des Betriebs des Getriebes eine Schmierung der Wälzkörper ausführbar ist.

Bei einer vorteilhaften Ausgestaltung ist der Außendurchmesser des zusätzlichen Lagers größer als der Außendurchmesser des ersten Lagers. Von Vorteil ist dabei, dass das zusätzliche Lager zur Aufnahme hoher Axialkräfte und Ableitung hoher Drehmomente geeignet ausführbar ist.

Bei einer vorteilhaften Ausgestaltung ist der Außendurchmesser des zusätzlichen Lagers größer als der Außendurchmesser des zweiten Lagers. Von Vorteil ist dabei, dass das zusätzliche Lager zur Aufnahme hoher Axialkräfte und Ableitung hoher Drehmomente geeignet ausführbar ist.

Bei einer vorteilhaften Ausgestaltung ist das zusätzliche Lager ein Schräglager, insbesondere ein einreihiges Schräglager. Von Vorteil ist dabei, dass das zusätzliche Lager zur Aufnahme hoher Axialkräfte und Ableitung hoher Drehmomente geeignet ausführbar ist.

Bei einer vorteilhaften Ausgestaltung ist ein Sicherungsring in einer an der Welle eingebrachten Ringnut angeordnet ist, welcher den Innenring des zusätzlichen Lagers axial begrenzt, insbesondere über einen axial zwischengeordneten, auf die Welle aufgesteckten Zwischenring,
insbesondere wobei der Zwischenring am Sicherungsring anliegt und auf seiner vom Sicherungsring abgewandten Seite am Innenring des zusätzlichen Lagers anliegt. Von Vorteil ist dabei, dass eine einfache axiale Begrenzung für das zusätzliche Lager versehbar ist.

Bei einer vorteilhaften Ausgestaltung ist am ersten Gehäuseteil eine Verschlussschraube in einer durch das Gehäuseteil durchgehenden Bohrung angeordnet. Von Vorteil ist dabei, dass eine Ölbefüllung des das zusätzliche Lager aufnehmenden Innenraums ermöglicht ist, insbesondere unabhängig von der Befüllung des vom zweiten Gehäuseteil umgebenen anderen Innenraumbereich des Getriebes. Von Vorteil ist dabei, dass durch Entfernen der Verschlussschraube Öl möglich ist.

Bei einer vorteilhaften Ausgestaltung mündet eine Rohrleitung mit ihrem ersten Endbereich in den vom ersten Gehäuseteil und Deckelteil umgebenen Innenraumbereich und mit ihrem anderen Endbereich in den zumindest vom zweiten Gehäuseteil umgebenen Innenraumbereich des Getriebes. Von Vorteil ist dabei, dass im Betrieb eine Ölförderung und somit auch ein Ausgleich mittels einer Ölpumpe ermöglicht ist, wobei die Ölpumpe als Wellenendpumpe kostengünstig ausführbar ist. Von Vorteil ist dabei, dass ein Ölausgleich im Getriebe ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

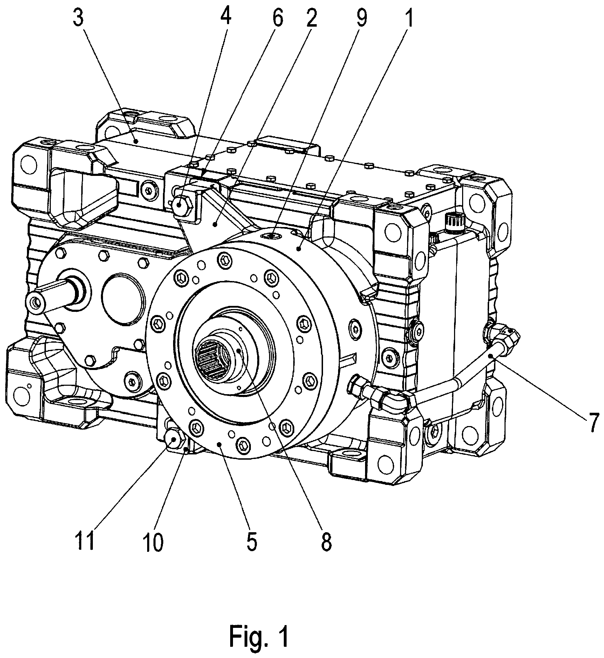

In der Figur 1 ist ein erfindungsgemäßes Getriebe in Schrägansicht dargestellt.

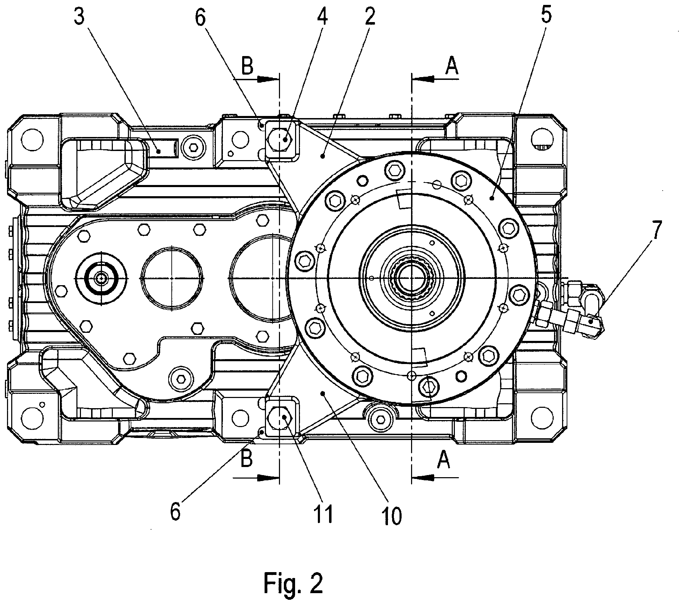

In der Figur 2 ist eine zugehörige Seitenansicht dargestellt, wobei eine erste Schnittebene A-A und eine dazu parallele zweite Schnittebene B_B gekennzeichnet ist und ein hervorragendes Beabstandungsteil 6 zu erkennen ist.

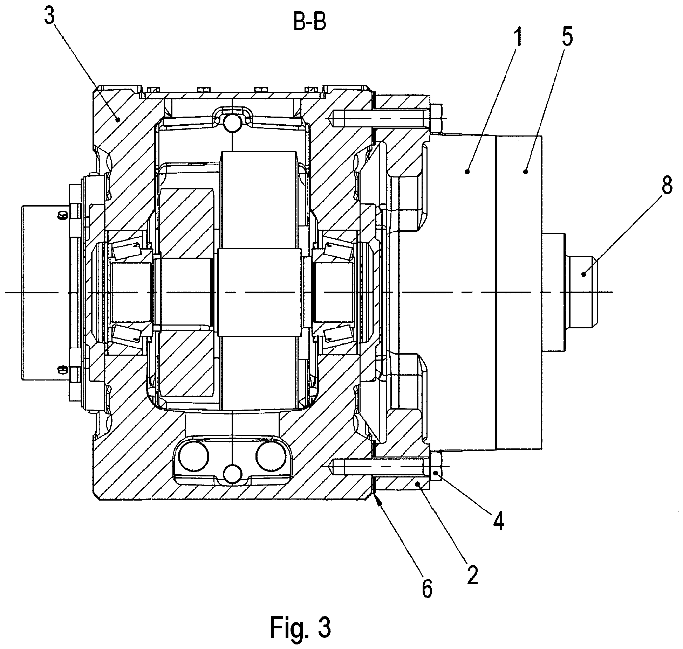

In der Figur 3 ist ein Querschnitt entlang der Schnittebene B-B dargestellt.

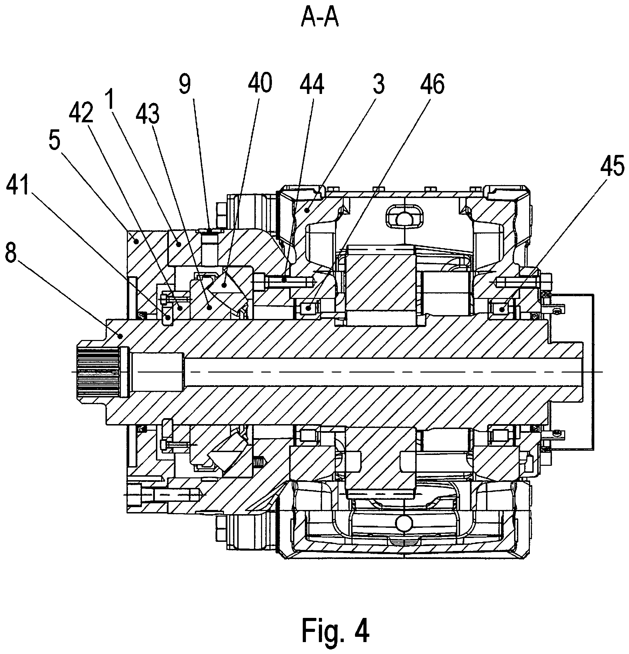

In der Figur 4 ist ein Querschnitt entlang der Schnittebene A-A dargestellt.

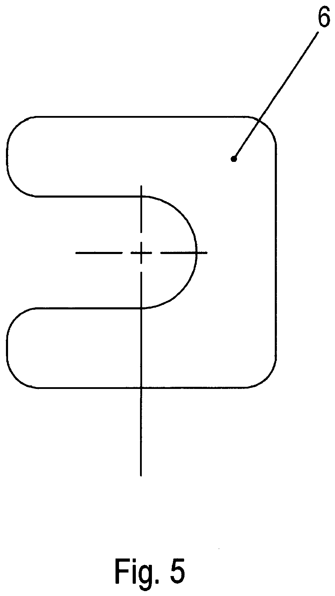

In der Figur 5 ist eine Draufsicht auf das Beabstandungsteil 6 dargestellt.

Wie in den Figuren dargestellt, weist das Getriebe eine abtreibende Welle 8 auf, die mittels zweier Lager (45, 46) drehbar gelagert ist. Diese Lager sind im Gehäuse des Getriebes aufgenommen, das ein Gehäuseteil 3 aufweist.

Die Welle 8 ist zwar drehfest mit einem Verzahnungsteil verbunden, das mit einem weiteren Verzahnungsteil des Getriebes im Eingriff steht. Jedoch ist das von der Welle 8 lastseitig herausgeleitete Drehmoment sehr hoch und lastseitig kann auch eine hohe Axialkraft zum Getriebe hineingebracht werden.

Diese hohen Belastungen sind beispielsweise von einem Extruder bewirkbar, der von dem Getriebe angetrieben wird.

Insbesondere zur Aufnahme und Ableitung hoher Axialkräfte ist ein zusätzliches Lager vorgesehen, das näher zur Lastseite, insbesondere also Abtriebsseite, angeordnet ist als die beiden Lager (45, 46).

Dieses zusätzliche Lager ist in einem ersten Gehäuseteil 1, insbesondere Drucklagergehäuseteil, aufgenommen. Das zusätzliche Lager ist als Schräglager ausgeführt, insbesondere wobei die Wälzkörper 40 tonnenartig ausgeformt sind. Vorzugsweise wird also ein Tonnenlager oder Pendelrollenlager verwendet.

Das zusätzliche Lager ist ein Axiallager. Der Außenring des zusätzlichen Lagers ist im Gehäuseteil 1 aufgenommen, das mit dem zweiten Gehäuseteil 3 mittels Schrauben verbunden ist. Zur Zentrierung des ersten Gehäuseteils 1 am zweiten Gehäuseteil 3 weist das erste Gehäuseteil 1 einen Zentrierbund auf, der in einen Zentriersitz des zweiten Gehäuseteils 3 eingeführt ist.

Der Innenring 43 des zusätzlichen Lagers ist auf die Welle 8 aufgesteckt und mittels eines Sicherungsrings 41, der in einer Ringnut der Welle 8 angeordnet ist, axial gesichert. Vorzugsweise ist hierbei ein Zwischenring 43 auf die Welle 8 aufgesteckt, welcher axial zwischen dem Sicherungsring 41 und dem Innenring 43 angeordnet ist.

An seiner von den Lagern (45, 46) axial abgewandten Seite ist am Gehäuseteil 1 ein Deckelteil 5 verbunden, welches die für das zusätzliche Lager notwendige Ausnehmung des Gehäuseteils 1 abdeckt.

Das Deckelteil 5 ist mittels Schrauben mit dem ersten Gehäuseteil 1 verbunden.

Der Sicherungsring 41 ist auf der von den Lagern (45, 46) abgewandten Seite des zusätzlichen Lagers angeordnet.

Im Deckelteil 5 ist ein Wellendichtring aufgenommen, der zur Welle 8 hin abdichtet. Insbesondere läuft eine Dichtlippe des Wellendichtrings auf einer an der Welle 8 ausgebildeten Lauffläche und dichtet somit die Welle 8 zum Deckelteil 5 hin ab.

Daher ist axial zwischen dem zusätzlichen Lager und den Lagern (45, 46) kein Wellendichtring notwendig.

Da jedoch der Außendurchmesser des zusätzlichen Lagers größer ist als der Außendurchmesser des ersten Lagers und größer ist als der Außendurchmesser des zweiten Lagers 46 und das zusätzliche Lager mit den Lagern (45, 46) koaxial ausgerichtet ist, ist der Innendurchmesser des am Gehäuseteil 1 ausgebildeten Lagersitzes für das zusätzliche Lager größer als der Innendurchmesser des Lagersitzes des ersten Lagers 45 und größer als der Innendurchmesser des Lagersitzes des zweiten Lagers 46.

Zur Durchführung der Welle 8 durch das erste Gehäuseteil 1 und das zweite Gehäuseteil 3 weist das erste Gehäuseteil 1 eine durchgehende Ausnehmung auf, welche einen lichten Innendurchmesser aufweist, der größer ist als der Außendurchmesser der Welle 8 und kleiner ist als der Innendurchmesser des am zweiten Gehäuseteil 3 ausgebildeten Lagersitzes des zweiten Lagers 46 und/oder als der Auendurchmesser des zweiten Lagers 46.

Das erste Gehäuseteil 1 hat somit eine topfförmige Ausbildung, die bei horizontaler Ausrichtung einen eigenen Ölsumpf ausbildet. Somit sind schon beim Stillstand des Getriebes die untersten Wälzkörper des zusätzlichen Lagers zumindest teilweise im Öl, also unterhalb des Ölpegels.

Dieser eigene Ölsumpf ist also zur Umgebung hin begrenzt durch das Deckelteil 5 und das erste Gehäuseteil 1.

Der Sitz des Wellendichtrings weist einen kleineren Innendurchmesser auf als der Sitz des zweiten Lagers 46 und als die durch das erste Gehäuseteil 1 durchgehende Ausnehmung.

Die Welle 8 ist als Hohlwelle ausgeführt und weist als mechanische lastseitige Schnittstelle eine Innenverzahnung auf.

Eine Verschlussschraube 9 verschließt eine durch das erste Gehäuseteil 1 durchgehende Gewindebohrung. Somit ist nach Entfernen der Verschlussschraube 9 Öl in den vom ersten Gehäuseteil 1 umgebenen Innenraum nachfüllbar. Vorzugsweise befindet sich die Verschlussschraube 9 in demjenigen Umfangswinkelbereich, in welchem der höchstgelegene Punkt des ersten Gehäuseteils 1 sich befindet.

Einstückig, insbesondere einteilig, sind am ersten Gehäuseteil 1 jeweils als Drehmomentstützteil ein erster Armbereich 2 und ein zweiter Armbereich 10 ausgeformt.

Somit ist das erste Gehäuseteil 1 zusammen mit den Armbereichen (2, 10) als Gussteil ausgeformt. Jeder der Armbereiche ist mittels einer jeweiligen Schraube (4, 11) an das zweite Gehäuseteil 3 verbunden.

Hierbei ist eine erste Schraube 4 durch eine durch den ersten Armbereich durchgehende Bohrung durchgesteckt, so dass der Gewindebereich der ersten Schraube 4 in eine ins zweite Gehäuseteil 3 eingebrachte Gewindebohrung eingeschraubt ist und der Schraubenkopf der ersten Schraube 4 auf der von der Gewindebohrung abgewandten Seite des ersten Armbereichs 2 auf den ersten Armbereich drückt. Dabei ist der Bereich, durch welchen die erste Schraube durchgeführt ist, mit einer dickeren Wandstärke ausgeführt als die an den Bereich angrenzenden Bereiche des ersten Gehäuseteils 1. Zwischen dem ersten Armbereich 2 und dem zweiten Gehäuseteil 3 ist ein Ausgleichsteil 6 angeordnet, welches die erste Schraube 4 in Umfangsrichtung zumindest teilweise umgibt.

Ebenso ist die zweite Schraube 11 durch eine durch den zweiten Armbereich durchgehende Bohrung durchgesteckt, so dass der Gewindebereich der zweiten Schraube 11 in eine ins zweite Gehäuseteil 3 eingebrachte Gewindebohrung eingeschraubt ist und der Schraubenkopf der zweiten Schraube 11 auf der von der Gewindebohrung abgewandten Seite des zweiten Armbereichs 2 auf den zweiten Armbereich drückt. Dabei ist derjenige Bereich des zweiten Armbereichs, durch welchen die zweite Schraube durchgeführt ist, mit einer dickeren Wandstärke ausgeführt als die an den Bereich angrenzenden Bereiche des zweiten Gehäuseteils 1. Zwischen dem zweiten Armbereich 10 und dem zweiten Gehäuseteil 3 ist ein Ausgleichsteil 6 angeordnet, welches die zweite Schraube 11 in Umfangsrichtung zumindest teilweise umgibt.

Das Ausgleichsteil 6 ist als Blechstück, insbesondere vorzugsweise als U-förmiges Blechstück, ausgeführt oder als Stapel von solchen, zueinander jeweils gleichartigen Blechstücken.

Somit ist mit dem solchermaßen einteilig oder mehrteilig ausgeführtem Ausgleichsteil 6 ein zwischen dem jeweiligen Armbereich (2, 10) und dem zweiten Gehäuseteil 3 vorhandener Spalt ausfüllbar und/oder überbrückbar.

Das Ausgleichsteil ist nicht mittig zur Drehachse der Welle 8 angeordnet, sondern weist einen Abstand zur Welle 8 hin auf.

Mittels der U-Form ist das Ausgleichsteil 6 aus radialer Richtung kommend in den Spalt einschiebbar.

Durch Anschrauben der jeweiligen Schraube (4, 11) wird das Ausgleichsteil 6 eingeklemmt, also kraftschlüssig gehalten, insbesondere zwischen dem zweiten Gehäuseteil 3 und dem jeweiligen Armbereich (2, 10).

Eine Rohrleitung 7 führt Schmieröl vom vom zweiten Gehäuseteil 3 zumindest teilweise umgebenen Innenraum des Getriebes zum zumindest teilweise vom ersten Gehäuseteil umgebenen Innenraum, der auch das zusätzliche Lager aufweist.

Die Lager 45 und 46 sind auch als Radiallager oder Rollenlager, insbesondere Zylinderrollenlager, ausführbar.

Vorzugsweise ist diejenige Ebene, welche die Schraubachse der ersten Schraube 4 und die Schraubachse der zweiten Schraube 11 enthält, parallel zur Drehachse der Welle 8. Vorzugsweise enthält diese Ebene die Vertikale.

Bei weiteren erfindungsgemäßen Ausführungsbeispielen wird das Ausgleichsteil 6 aus einem elastischeren, insbesondere weicheren, Material ausgeführt als das erste Gehäuseteil 1, das zweite Gehäuseteil 3 und/oder das Deckelteil 5. Somit sind Schwingungen und Geräuschbildung bei Betrieb des Getriebes verminderbar.

### Bezugszeichenliste

1 erstes Gehäuseteil, insbesondere Drucklagergehäuseteil
2 erster Armbereich
3 zweites Gehäuseteil
4 Schraube
5 Deckelteil
6 Ausgleichsteil
7 Rohrleitung
8 Welle
9 Verschlussschraube
10 zweiter Armbereich
40 Wälzkörper
41 Sicherungsring
42 Zwischenring
43 Innenring
44 Schraube
45 erstes Lager
46 zweites Lager

## Patentansprüche

1. Getriebe mit einer Welle (8),
wobei die Welle (8) mittels eines ersten Lagers (45), , und eines zweiten Lagers (46, drehbar gelagert ist,
wobei ein erstes Gehäuseteil (1) mit einem zweiten Gehäuseteil (3) des Getriebes verbunden ist,
wobei ein zusätzliches Lager, im ersten Gehäuseteil (1) aufgenommen ist,
wobei das erste Lager (45) in dem zweiten Gehäuseteil (3) des Getriebes aufgenommen ist,
wobei das zweite Lager (46) in dem zweiten Gehäuseteil (3) des Getriebes aufgenommen ist,
wobei am ersten Gehäuseteil (1) zumindest ein erster Armbereich (2) angeformt ist,
wobei der erste Armbereich (2) zum zweiten Gehäuseteil (3) insbesondere drehfest verbunden ist,
**dadurch gekennzeichnet, dass**
ein Ausgleichsteil (6) zwischen dem ersten Armbereich (2) und dem zweiten Gehäuseteil (2) angeordnet ist, wobei das Ausgleichsteil (6) einen Abstand zwischen dem ersten Armbereich (2) und dem zweiten Gehäuseteil (3) ausfüllt, wobei das Ausgleichsteil (6) U-förmig ausgeführt ist.

2. Getriebe nach Anspruch 1,
**dadurch gekennzeichnet, dass**
das zusätzliche Lager auf der axial vom ersten Lager (45) abgewandten Seite des zweiten Lagers (46) angeordnet ist.

3. Getriebe nach einem der vorangegangenen Ansprüche,
**dadurch gekennzeichnet, dass**
**der erste Armbereich (2) am ersten Gehäuseteil (1) radial hervorragt.**

4. Getriebe nach einem der vorangegangenen Ansprüche,
**dadurch gekennzeichnet, dass**
eine durch eine durchgehende Ausnehmung des ersten Armbereichs (2) durchgehende erste Schaube mit ihrem Gewindebereich in eine Gewindebohrung des zweiten Gehäuseteils eingeschraubt ist und mit ihrem auf der vom zweiten Gehäuseteil (3) abgewandten Seite des ersten Armbereichs (2) angeordneten Schraubenkopf den ersten Armbereich (2) zum zweiten Gehäuseteil (3) hindrückt, insbesondere wobei die durchgehende Ausnehmung
- in einem verdickten Bereich des ersten Armbereichs (2) angeordnet ist und/oder
- in einem Bereich des ersten Armbereichs (2) angeordnet ist, welcher eine größere Wandstärke aufweist als ein anderer, an den Bereich angrenzender Bereich des ersten Armbereichs (2).

5. Getriebe nach einem der vorangegangenen Ansprüche,
**dadurch gekennzeichnet, dass**
am ersten Gehäuseteil (1) zumindest ein zweiter Armbereich (10) angeformt ist, wobei der zweite Armbereich (10) zum zweiten Gehäuseteil (3) insbesondere drehfest verbunden ist, insbesondere wobei der zweite Armbereich (10) am ersten Gehäuseteil (1) radial hervorragt.

6. Getriebe nach einem der vorangegangenen Ansprüche,
**dadurch gekennzeichnet, dass**
eine durch eine durchgehende Ausnehmung des zweiten Armbereichs (10) durchgehende zweite Schaube mit ihrem Gewindebereich in eine zweite Gewindebohrung des zweiten Gehäuseteils eingeschraubt ist und mit ihrem auf der vom zweiten Gehäuseteil (3) abgewandten Seite des zweiten Armbereichs (10) angeordneten Schraubenkopf den zweiten Armbereich (10) zum zweiten Gehäuseteil (3) hindrückt, insbesondere wobei die durchgehende Ausnehmung
- in einem verdickten Bereich des zweiten Armbereichs (10) angeordnet ist und/oder
- in einem Bereich des zweiten Armbereichs (10) angeordnet ist, welcher eine größere Wandstärke aufweist als ein anderer, an den Bereich angrenzender Bereich des zweiten Armbereichs (10).

7. Getriebe nach einem der vorangegangenen Ansprüche,
**dadurch gekennzeichnet, dass**
**das Ausgleichsteil (6) aus einem weicheren Material als das erste Gehäuseteil (1) und als das zweite Gehäuseteil** (3) **ausgeführt ist.**

8. Getriebe nach einem der vorangegangenen Ansprüche,
**dadurch gekennzeichnet, dass**
das Ausgleichsteil (6) einteilig ausgeführt ist oder mehrteilig, insbesondere als Stapel von zueinander identischen Teilen.

9. Getriebe nach einem der vorangegangenen Ansprüche,
**dadurch gekennzeichnet, dass**
das Ausgleichsteil (6) aus radialer Richtung kommend auf die Schraube (4) aufsteckbar ist, und/oder als ebenes Stanzteil hergestellt ist.

10. Getriebe nach einem der vorangegangenen Ansprüche,
**dadurch gekennzeichnet, dass**
ein Deckelteil (5) mit dem ersten Gehäuseteil (1) verbunden ist,
wobei im Deckelteil (5) ein Wellendichtring aufgenommen ist, welcher das Deckelteil (5) zur Welle (8) hin abdichtet.
insbesondere wobei das Deckelteil (5) auf der vom ersten Lager (45) axial abgewandten Seite des zusätzlichen Lagers angeordnet ist.

11. Getriebe nach einem der vorangegangenen Ansprüche,
**dadurch gekennzeichnet, dass**
die axiale Richtung parallel zur Drehachse der Welle (8) ist,
insbesondere wobei das Getriebe derart ausgerichtet ist, dass die Drehachse im Wesentlichen horizontal ausgerichtet ist.

12. Getriebe nach einem der vorangegangenen Ansprüche,
**dadurch gekennzeichnet, dass**
die Welle (8) durch eine Ausnehmung des ersten Gehäuseteils hindurchragt, deren Innendurchmesser, insbesondere lichter Innendurchmesser, kleiner ist als der Außendurchmesser des zweiten Lagers (46) und kleiner ist als der Außendurchmesser des zusätzlichen Lagers.

13. Getriebe nach einem der vorangegangenen Ansprüche,
**dadurch gekennzeichnet, dass**
der Außendurchmesser des zusätzlichen Lagers größer ist als der Außendurchmesser des ersten Lagers (45)
und/oder dass
der Außendurchmesser des zusätzlichen Lagers größer ist als der Außendurchmesser des zweiten Lagers (46).

14. Getriebe nach einem der vorangegangenen Ansprüche,
**dadurch gekennzeichnet, dass**
das zusätzliche Lager ein Schräglager ist, insbesondere ein einreihiges Schräglager,
und/oder dass
ein Sicherungsring (41) in einer an der Welle (8) eingebrachten Ringnut angeordnet ist, welcher den Innenring (43) des zusätzlichen Lagers axial begrenzt, insbesondere über einen axial zwischengeordneten, auf die Welle (8) aufgesteckten Zwischenring (42),
insbesondere wobei der Zwischenring (42) am Sicherungsring (41) anliegt und auf seiner vom Sicherungsring (41) abgewandten Seite am Innenring (43) des zusätzlichen Lagers anliegt.

15. Getriebe nach einem der vorangegangenen Ansprüche,
**dadurch gekennzeichnet, dass**
am ersten Gehäuseteil (1) eine Verschlussschraube (9) in einer durch das Gehäuseteil durchgehenden Bohrung angeordnet ist
und/oder dass
eine Rohrleitung (7) mit ihrem ersten Endbereich in den vom ersten Gehäuseteil (1) und Deckelteil (5) umgebenen Innenraumbereich mündet und mit ihrem anderen Endbereich in den zumindest vom zweiten Gehäuseteil (3) umgebenen Innenraumbereich des Getriebes mündet.

## Claims

1. A gear unit with a shaft (8),
wherein the shaft (8) is rotatably mounted by means of a first bearing (45) and a second bearing (46),
wherein a first housing part (1) is connected to a second housing part (3) of the gear unit,
wherein an additional bearing is accommodated in the first housing part (1),
wherein the first bearing (45) is accommodated in the second housing part (3) of the gear unit,
wherein the second bearing (46) is accommodated in the second housing part (3) of the gear unit,
wherein at least a first arm region (2) is formed on the first housing part (1),
wherein the first arm region (2) is connected in particular non-rotatably in relation to the second housing part (3),
**characterised in that**
a compensating part (6) is arranged between the first arm region (2) and the second housing part (2), the compensating part (6) filling a distance between the first arm region (2) and the second housing part (3),
the compensating part (6) being formed in a U-shape.

2. A gear unit according to claim 1,
**characterised in that**
the additional bearing is arranged on that side of the second bearing (46) which faces away axially from the first bearing (45).

3. A gear unit according to one of the preceding claims,
**characterised in that**
the first arm region (2) protrudes radially from the first housing part (1).

4. A gear unit according to one of the preceding claims,
**characterised in that**
a first screw which passes through an uninterrupted cutout in the first arm region (2) is screwed by its threaded region into a threaded bore in the second housing part, and with its screw head which is arranged on that side of the first arm region (2) which faces away from the second housing part (3) presses the first arm region (2) towards the second housing part (3),
in particular with the uninterrupted cutout
- being arranged in a thickened region of the first arm region (2) and/or
- being arranged in a region of the first arm region (2) which is of a greater wall thickness than another region of the first arm region (2) which adjoins the region.

5. A gear unit according to one of the preceding claims,
**characterised in that**
at least a second arm region (10) is formed on the first housing part (1),
with the second arm region (10) being connected in particular non-rotatably in relation to the second housing part (3),
in particular with the second arm region (10) protruding radially from the first housing part (1).

6. A gear unit according to one of the preceding claims,
**characterised in that**
a second screw which passes through an uninterrupted cutout in the second arm region (10) is screwed by its threaded region into a second threaded bore in the second housing part, and with its screw head which is arranged on that side of the second arm region (10) which faces away from the second housing part (3) presses the second arm region (10) towards the second housing part (3),
in particular with the uninterrupted cutout
- being arranged in a thickened region of the second arm region (10) and/or
- being arranged in a region of the second arm region (10) which is of a greater wall thickness than another region of the second arm region (10) which adjoins the region.

7. A gear unit according to one of the preceding claims,
**characterised in that**
the compensating part (6) is made of a softer material than the first housing part (1) and the second housing part (3).

8. A gear unit according to one of the preceding claims,
**characterised in that**
the compensating part (6) is embodied in one part or in multiple parts, in particular as a stack of parts which are identical to each other.

9. A gear unit according to one of the preceding claims,
**characterised in that**
the compensating part (6) can be mounted on the screw (4), coming from the radial direction, and/or is produced as a flat stamped part.

10. A gear unit according to one of the preceding claims,
**characterised in that**
a cover part (5) is connected to the first housing part (1),
with a shaft sealing ring which seals off the cover part (5) towards the shaft (8) being accommodated in the cover part (5),
in particular with the cover part (5) being arranged on that side of the additional bearing which faces away axially from the first bearing (45).

11. A gear unit according to one of the preceding claims,
**characterised in that**
the axial direction is parallel to the axis of rotation of the shaft (8),
in particular with the gear unit being oriented such that the axis of rotation is oriented substantially horizontally.

12. A gear unit according to one of the preceding claims,
**characterised in that**
the shaft (8) protrudes through a cutout in the first housing part, the internal diameter, in particular clear internal diameter, of which is smaller than the external diameter of the second bearing (46) and is smaller than the external diameter of the additional bearing.

13. A gear unit according to one of the preceding claims,
**characterised in that**
the external diameter of the additional bearing is greater than the external diameter of the first bearing (45)
and/or **in that**
the external diameter of the additional bearing is greater than the external diameter of the second bearing (46).

14. A gear unit according to one of the preceding claims,
**characterised in that**
the additional bearing is an angular contact bearing, in particular a single-row angular contact bearing,
and/or **in that**
a securing ring (41) is arranged in an annular groove formed on the shaft (8), which securing ring axially limits the inner ring (43) of the additional bearing, in particular by way of an axially interposed intermediate ring (42) which is mounted on the shaft (8),
in particular with the intermediate ring (42) lying against the securing ring (41) and on its side which faces away from the securing ring (41) lying against the inner ring (43) of the additional bearing.

15. A gear unit according to one of the preceding claims,
**characterised in that**
on the first housing part (1), a screw plug (9) is arranged in a bore which passes through the housing part
and/or **in that**
a pipe (7) opens with its first end region into the interior region surrounded by the first housing part (1) and cover part (5) and with its other end region opens into the interior region of the gear unit which is surrounded at least by the second housing part (3).

## Revendications

1. Transmission comprenant un arbre (8),
l'arbre (8) étant monté rotatif au moyen d'un premier palier (45) et d'un second palier (46),
une première partie de carter (1) étant reliée à une seconde partie de carter (3) de la transmission,
un palier supplémentaire étant logé dans la première partie de carter (1),
le premier palier (45) étant logé dans la seconde partie de carter (3) de la transmission, le second palier (46) étant logé dans la seconde partie de carter (3) de la transmission, au moins une première région de bras (2) étant formée sur la première partie de carter (1),
la première région de bras (2) étant en particulier reliée de manière solidaire en rotation à la seconde partie de carter (3),
**caractérisée en ce que**
une pièce d'équilibrage (6) est agencée entre la première région de bras (2) et la seconde partie de carter (3), la pièce d'équilibrage (6) occupant une distance comprise entre la première région de bras (2) et la seconde partie de carter (3),
la pièce d'équilibrage (6) étant réalisée en forme de U.

2. Transmission selon la revendication 1,
**caractérisée en ce que**
le palier supplémentaire est agencé sur le côté du second palier (46) qui est opposé axialement au premier palier (45).

3. Transmission selon l'une quelconque des revendications précédentes,
**caractérisée en ce que**
la première région de bras (2) fait saillie radialement au niveau de la première partie de carter (1).

4. Transmission selon l'une quelconque des revendications précédentes,
**caractérisée en ce que**
une première vis, passant par un évidement traversant de la première région de bras (2), est vissée grâce à sa région filetée dans un alésage fileté de la seconde partie de carter et pousse la première région de bras (2) vers la seconde partie de carter (3) avec sa tête de vis agencée sur le côté de la première région de bras (2) qui est opposé à la seconde partie de carter (3),
l'évidement traversant étant en particulier
- agencé dans une région épaissie de la première région de bras (2) et/ou
- agencé dans une région de la première région de bras (2) qui présente une épaisseur de paroi supérieure à celle d'une autre région de la première région de bras (2) qui est adjacente à ladite région.

5. Transmission selon l'une quelconque des revendications précédentes,
**caractérisée en ce que**
au moins une seconde région de bras (10) est formée sur la première partie de carter (1),
la seconde région de bras (10) étant reliée, en particulier de manière solidaire en rotation, à la seconde partie de carter (3),
la seconde région de bras (10) faisant en particulier saillie radialement au niveau de la première partie de carter (1).

6. Transmission selon l'une quelconque des revendications précédentes,
**caractérisée en ce que**
une seconde vis, passant par un évidement traversant de la seconde région de bras (10), est vissée grâce à sa région filetée dans un second alésage fileté de la seconde partie de carter et pousse la seconde région de bras (10) vers la seconde partie de carter (3) avec sa tête de vis agencée sur le côté de la seconde région de bras (10) qui est opposé à la seconde partie de carter (3),
l'évidement traversant étant en particulier
- agencé dans une région épaissie de la seconde région de bras (10) et/ou
- agencé dans une région de la seconde région de bras (10) qui présente une épaisseur de paroi supérieure à celle d'une autre région de la seconde région de bras (10) qui est adjacente à ladite région.

7. Transmission selon l'une quelconque des revendications précédentes,
**caractérisée en ce que**
la pièce d'équilibrage (6) est constituée d'un matériau plus tendre que celui de la première partie de carter (1) et de la seconde partie de carter (3).

8. Transmission selon l'une quelconque des revendications précédentes,
**caractérisée en ce que**
la pièce d'équilibrage (6) est réalisée en une seule pièce ou en plusieurs pièces, en particulier sous la forme d'un empilement de pièces identiques les unes aux autres.

9. Transmission selon l'une quelconque des revendications précédentes,
**caractérisée en ce que**
la pièce d'équilibrage (6) peut être enfichée en direction radiale sur la vis (4) et/ou est fabriquée sous la forme d'une pièce emboutie plane.

10. Transmission selon l'une quelconque des revendications précédentes,
**caractérisée en ce que**
une partie couvercle (5) est reliée à la première partie de carter (1),
une bague d'étanchéité d'arbre qui rend étanche la partie couvercle (5) par rapport à l'arbre (8) étant logée dans la partie couvercle (5).
la partie couvercle (5) étant en particulier agencée sur le côté du palier supplémentaire qui est opposé axialement au premier palier (45).

11. Transmission selon l'une quelconque des revendications précédentes,
**caractérisée en ce que**
la direction axiale est parallèle à l'axe de rotation de l'arbre (8),
la transmission étant en particulier orientée de telle manière que l'axe de rotation est orienté de manière essentiellement horizontale.

12. Transmission selon l'une quelconque des revendications précédentes,
**caractérisée en ce que**
l'arbre (8) traverse un évidement de la première partie de carter, dont le diamètre intérieur, en particulier le diamètre intérieur libre, est inférieur au diamètre extérieur du second palier (46) et est inférieur au diamètre extérieur du palier supplémentaire.

13. Transmission selon l'une quelconque des revendications précédentes,
**caractérisée en ce que**
le diamètre extérieur du palier supplémentaire est supérieur au diamètre extérieur du premier palier (45)
et/ou **en ce que**
le diamètre extérieur du palier supplémentaire est supérieur au diamètre extérieur du second palier (46)

14. Transmission selon l'une quelconque des revendications précédentes,
**caractérisée en ce que**
le palier supplémentaire est un palier oblique, en particulier un palier à contact oblique à une rangée de billes,
et/ou **en ce que**
une bague de blocage (41) est agencée dans une rainure annulaire ménagée sur l'arbre (8) et limite axialement la bague intérieure (43) du palier supplémentaire, en particulier par l'intermédiaire d'une bague intermédiaire (42) enchâssée axialement et enfichée sur l'arbre (8),
la bague intermédiaire (42) s'appuyant en particulier contre la bague de blocage (41) et, sur son côté opposé à la bague de blocage (41), contre la bague intérieure (43) du palier supplémentaire.

15. Transmission selon l'une quelconque des revendications précédentes,
**caractérisée en ce que**
sur la première partie de carter (1), une vis de fermeture (9) est agencée dans un alésage traversant la partie de carter
et/ou **en ce que**
la première région d'extrémité d'une conduite (7) débouche dans la région d'espace intérieur entourée par la première partie de carter (1) et la partie couvercle (5), et son autre région d'extrémité débouche dans la région d'espace intérieur de la transmission qui est entourée au moins par la seconde partie de carter (3).
